# EUROPEAN PATENT SPECIFICATION

(11) **EP 0 568 512 B1**
(45) Date of publication and mention of the grant of the patent: **26.06.1996**
(21) Application number: 93850085.7
(22) Date of filing: 16.04.1993
(51) Int. Cl.: B23B 27/04

(54) **Cutting insert for turning and grooving tools**
Schneideinsatz für Dreh- und Nutenwerkzeug
Plaquette de coupe pour outil de tournage et de rainurage

(30) Priority: 30.04.1992 SE 9201364
(43) Date of publication of application: 03.11.1993
(73) Proprietor: SANDVIK AKTIEBOLAG, S-811 81 Sandviken 1 (SE)
(72) Inventor: Lindstedt, Lars, S-811 37 Sandviken (SE)
(74) Representative: Taquist, Lennart

(56) References cited:
- EP-A- 0 278 083
- EP-A- 0 360 774
- WO-A-89/01375

## Description

The present invention relates to a cutting insert for turning and grooving tools, primarily for grooving operations in metal workpieces, that could also be useful for cutting off rods, tubes or other rotationally symmetrical details. Such cutting insert is provided with a cutting edge formed by the transition between the top surface or rake surface of the insert and its forward clearance face.

In metal cutting operation, the breaking of the chip and the shape of the chip are often of great importance for an undisturbed production. In modern, high-productive machines and tools there are great demands upon an efficient chip removal and good chip control. This is of special importance in such high-productive machines in which a serie of different tools are performing different operations in a continuous sequence. It is not unusual that in such operations the chips may become tangled and wrap around the workpiece or the tool. This creates problems in subsequent operations, especially if automated workpiece handling equipment is involved. These difficulties are compounded when it comes to camshaft or crankshaft turning where several grooves are generated in one operation. The end result is usually high production costs due to expansive machine downtime to clear chips or repair tools.

The prior art disclosure of WO-A-89/01375 (cf the preamble of claim 1) relates to a generally rectangularly shaped cutting insert for turning and recessing operations the front portion of which is provided with a main cutting edge formed by the intersection between the upper surface and the front surface of the insert, and a chipforming device in the shape of a singular recess is provided radially inside of said main cutting edge, the rear wall portion of said recess extending upwardly so as to act as a chipbreaking wall.

EP-A-360774 discloses an insert provided with a chipforming device formed by a plurality of recesses centrally located on the upper surface. This insert has polygonal symmetry for being indexed to three or more cutting orientations.

In view of difficulties with prior art inserts and tools it is a purpose of the present invention to provide an improved type of turning insert that is formed so as to optimize chip control for the specific demands and conditions of the difficult operations referred to above.

According to the invention this purpose is achieved by the features of claim 1. Prefered embodiments are defined in the dependent claims.

The dimpled chipbreaker and the confining walls thereof are designed so as to form the chip narrower than the groove such that more, efficiently manageable safe chips can be obtained. Chip disposal should become safer and more efficient and less costly. With such inserts it shall become possible to generate a finished groove in one pass in the workpiece such as a crankshaft.

These and other objects have been achieved by shaping the insert as described hereinafter in connection with the appended drawings.

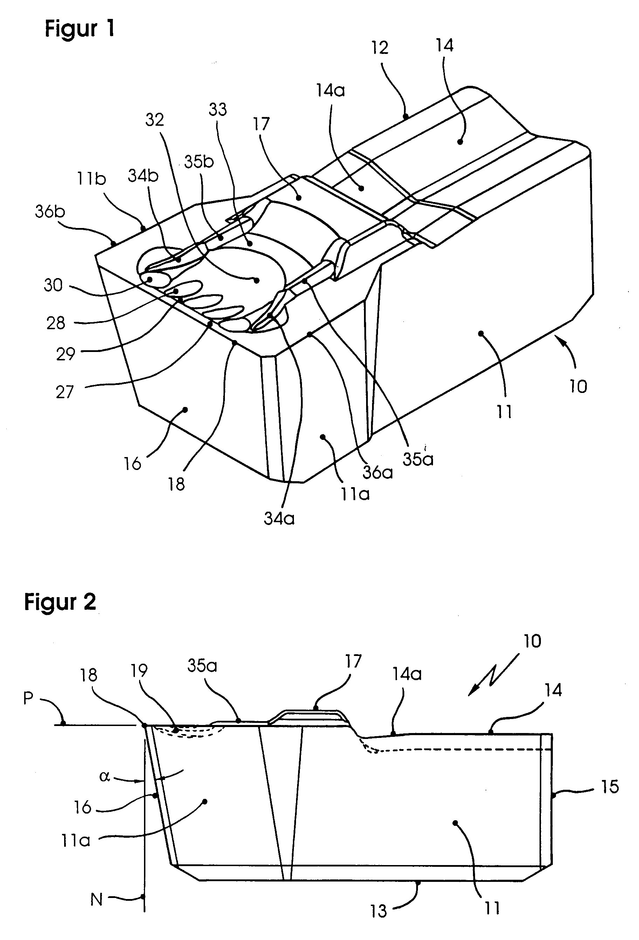

Fig 1 shows a perspective view of an insert according to the invention.

Fig 2 shows a side view of the insert in Fig 1,

Fig 3 shows a top view of the insert in Fig 1.

Fig 4 shows a front view of the insert in Fig 1,

Fig 5 shows a cross-section along the line A-A in Fig 3,

Fig 6 shows a cross-section along the line B-B in Fig 3,

Fig 7 shows a cross-section along the line C-C in Fig 3,

Fig 8 shows a perspective view of a holder for the insert,

Fig 9 shows a partial front view of the insert located in the tip-seat of the holder in Fig 8, and

Fig 10 shows a chip obtained from chipforming by the insert in Fig 1-7.

An insert 10 according to the invention is shown in the figures. The insert is in the shape of a polygonal body of generally parallepipedic shape. It comprises two mainly plane-parallel side surfaces 11, 12, opposed top and bottom surfaces 14 and 13 respectively, two end surfaces 15, 16, and a shoulder 17. The front portion of the insert is provided with a main cutting edge 18 and a chip forming device 19. The insert is intended to be secured to a holder body provided with an integral clamping arm. The top surface 14 is broken at the vicinity of the shoulder 17 so that surface portion 14a forms an acute angle with the remainder of said surface 14.

The insert 10 is intended to be removably held in a holder, which comprises a holder body 20 having an integral clamping arm 21 in the front portion 22 of said holder body 20 and an insert receiving recess 23 in which the insert is to be located. The recess 23 communicates at an inner end thereof with an elongated slit 24 which terminates into a circular recess 25. A clamping screw 26 extends into the holder through the clamping arm 21 and through the slit 24. When the screw 26 is threaded into the holder the clamping arm 21 flexes downwardly about said recess 23 and causes the clamping arm 21 into firm clamping abutment with the upper top surface of the insert. More specifically, the nose portion of the clamping arm 21 is somewhat inclined downwardly so that it matches the inclination of upper surface portion 14a of the insert 10.

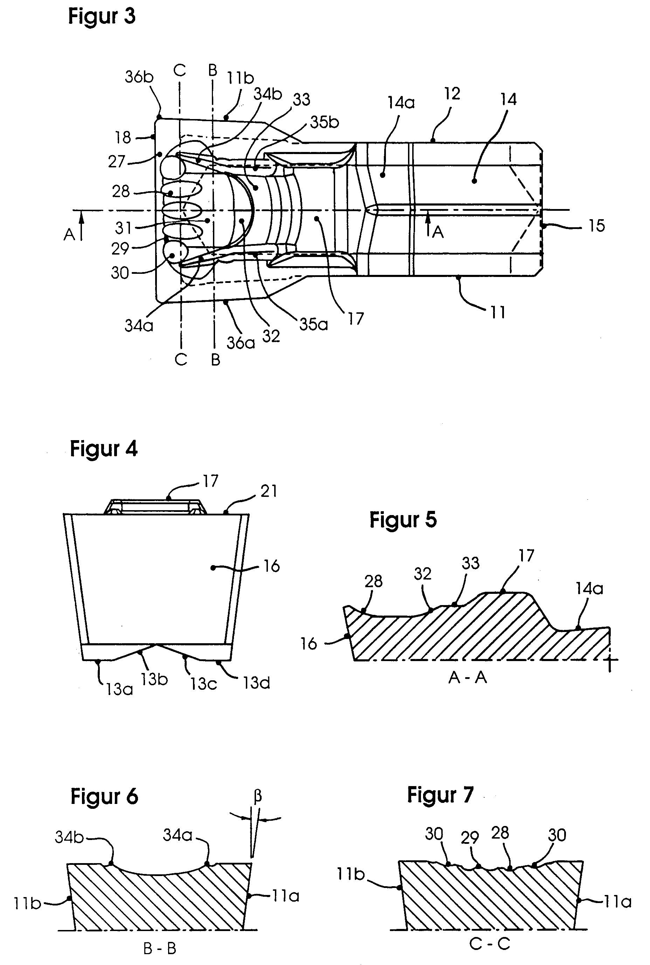

Bottom surface 13 is intended to be a first support surface for the insert against the holder body which shall be parallel with a neutral plane P defined by the axial feed direction of the machine. More specifically bottom surfaces includes two distantly provided flat surface portions 13a and 13d, and two inclined surfaces 13b and 13c therebetween, whereby said inclined surfaces 13b, 13c provide a V-shaped recess. The surfaces 13b and 13c are intended to be in abutment with correspondingly inclined surfaces in the insert site of the holder as shown in Fig 6 and 7. As appears therefrom the surfaces 13a and 13d are not to be active support surfaces. The top surface 14 constitutes a second support surface for the insert against the holder body. The top surface 14 is oriented parallel with the bottom surface 13.

The cutting edge 18 is straight and is formed along the intersection line of clearance face 16 and a primary land 27. The clearance face 16, which is the front end surface of the insert, forms an acute angle α, about 1-15° with a normal N drawn to said primary land 27, whereby said primary land 27 coincides with neutral plane P.

The land 27 is bordered radially inwardly by an array of spaced recesses or grooves 28 extending on the rake face of the insert starting from the primary land 27. The width of the land 27 is varying along the edge 18 in such a way that the width is smaller at those portions located next to the front end portions of each recess 28 whereas the width is larger at the inclined rake surface portions 29 located therebetween. The maximum width of each recess 28 is preferably larger than the distance between the depressions. Each recess has a depth initially increasing in a direction away from said primary land and thereafter decreasing in said direction. There are a number of more centrally provided oval-shaped recesses 28 having a longitudinal extension, perpendicularly from the cutting edge 18, that is several times larger than the width of said recess 28. Preferably there is, on each side of said central group of oval-shaped recesses 28 a recess 30 having a larger width and shorter length than each of said central recesses 28.

Also formed in the top surface 14 of the insert is a recess 31, which curves inwardly and downwardly from the land surface 27 and then curves upwardly to form a rear wall or chip deflector surface 32. The chip deflector surface 32 terminates in a plateau 33 located approximately at the same level as the neutral plane P.

The chipforming device 19 additionally includes a pair of ridges 34, each of which extends from the outer periphery of the recess 30. More specifically, the front ridge portion 34a and 34b are so formed that they converge rearwardly, and they extend rearwardly to the point where they meet with rear ridge portions 35a and 35b which are mutually parallel and extending essentially perpendicularly from the cutting edge 18. Furthermore, the said front ridge portions 34a and 34b are formed with a top surface that is raised rearwardly until the portion where said front ridge 34a, 34b intersect with said rear straight ridge 35a, 35b at which intersection the top surface of said rear ridge has a level that remains constant furtheron rearwardly. This level of the upper surface of said rear ridges is located somewhat above plane P.

By arranging the ridges as aforesaid it is ensured that the chip remains in contact with said forward ridge portions 34a, 34b and the central portion of the chip is urged deeper into the recess 31 which means that the total width of the chip is made narrower and becomes more easily manageable so that no harm is made from the chip on to the side walls of the groove which is to be formed by said insert during cutting in a metal workpiece.

The forward end of the insert 10 additionally is provided with side cutting edges 36a and 36b, which merge rearwardly to an intermediate position along the insert, whilst intersecting with the land surface 27 which extends along both the main cutting edge 18 and along said side cutting edges 36a, 36b. The clearance faces of said side cutting edges 36a, 36b are designated 11a and 11b whereby each said clearance face 11a, 11b intersect with the land 27 at an acute angle β.

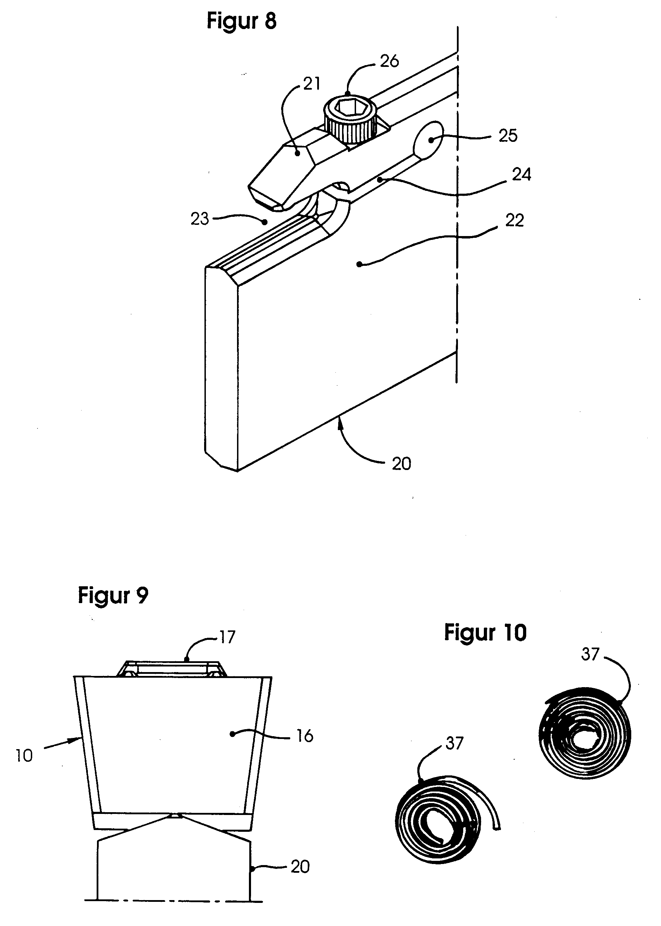

By virtue of the particular construction of the chip forming device as aforesaid it will be possible to obtain desirable clock-shaped chips 37 such as shown in Fig 8, obtained at a feed rate of 0,30 mm/revolution. If no proper chip deflection device is provided into the upper rake surface of the insert chips obtained would otherwise be difficult to manage. Also at moderate feed rates the chip forming device of this invention effectively contributes to the control and removal of such chips. When large feeds are used the chip will be pressed against the rear wall 32 of recess 31 which forces the chip to be bent in a favourable manner.

The embodiment described above also results in a certain reduction of the cutting forces because these grooves mean reduced contact area and increased positive rake angle. Due to the fact that a reduced contact area is obtained a relatively low heat generation is obtained.

## Claims

1. A generally rectangularly shaped metal cutting insert for turning and grooving operations comprising upper and lower front-to-rear extending surfaces (13, 14), two oppositely disposed side surfaces (11, 12) interconnecting said upper and lower front-to-rear extending surfaces, and front and rear end surfaces (15, 16) each intersecting said upper and lower front-to-rear extending surfaces and said side surface, a front portion of said upper surface including a main cutting edge (18) formed by the intersection between said upper surface and said front surface (16), a chipforming device (19) disposed radially inside of said main cutting edge, said chipforming device including a first recess which curves inwardly and downwardly from a flat land area (27) adjacent the cutting edge (18), said first recess curving upwardly to form a chipbreaker wall (32) which is disposed radially inside of said chipforming device and extending upwardly therefrom, **characterized** in that the chipforming device (19) is formed by a plurality of second recesses (28) centrally located on the upper surface and having a bigger depth than the depth of the first recess, each said second recess being located at a predetermined distance inside the cutting edge and having an elongated extension in a direction parallel with the longitudinal extension of the insert, the lateral extension of the first recess being confined by first ridge portions (34a, 34b) that converge rearwardly and merge at a rearward point with integral second ridge portions (35a, 35b), said second ridge portions extending essentially perpendicularly with respect to said main cutting edge (18).

2. An insert according to claim 1, **characterized** in that the insert is provided with third recesses (30) shorter in length along the longitudinal extension of the insert, said third recesses being arranged on either side of said centrally provided recesses (28).

3. An insert according to claim 1 or 2, **characterized** in that the recesses (28, 30) are distantly provided from each other and that there is a flat land area (27) provided between the main cutting edge (18) and said recesses (28, 30), said land (27) being oriented in a plane (P) extending in the longitudinal extension of said insert.

4. An insert according to claim 1, **characterized** in that said first ridge portions (34a, 34b) extend from the outer periphery of said third recesses (30), and that said second ridge portions (35a, 35b) extend to the forward slope of a shoulder (17) provided rearwardly of said chipbreaking wall (32).

5. An insert according to any of the claims 1-4, **characterized** in that the forward end of the insert is provided with side cutting edges (36a, 36b), which converge rearwardly to an intermediate position along the insert.

6. An insert according to any of the claims 1-5, **characterized** in that the rear chip breaking wall (32) terminates in a plateau (33) located approximately at the same level as a neutral plane (P) containing also said primary land (27).

7. An insert according to any of the claims 1-6, **characterized** in that the width of the land (27) is varying along the edge (18) in such manner that said width is smaller at a portion in front of the forward end of each oval recess (28) whereas said width is larger at portions in front of the intermediate rake surfaces (29) located between adjacent recesses (28).

8. An insert according to any of the claims 1-7, **characterized** in that said front ridge portions (34a, 34b) are each formed with a top surface inclined upwards until they intersect with a top surface of said rear ridge portions (35a, 35b).

9. An insert according to claim 1-8, **characterized** in that the level of the top surface of the rear ridge portions (35a, 35b) is located at a level above and generally parallel to the level of said neutral plane (P) containing said flat land.

## Patentansprüche

1. Im wesentlichen rechtwinklig geformter Schneideinsatz für Metallbearbeitung für Dreh- und Nutarbeiten, mit oberen und unteren sich von vorn nach hinten erstreckenden Flächen (13, 14), zwei gegenüberliegend angeordneten Seitenflächen (11, 12), welche die oberen und unteren, sich von vorn nach hinten erstreckenden Flächen miteinander verbinden, und vorderen und hinteren End- bzw. Stirnflächen (15, 16), die jeweils die oberen und unteren, sich von vorn nach hinten erstreckenden Flächen und die Seitenflächen schneiden, wobei ein vorderer Abschnitt der oberen Fläche eine Hauptschneidkante (18) aufweist, die durch den Schnitt zwischen der oberen Fläche und der vorderen Fläche (16) gebildet wird, eine Spanformungseinrichtung (19) aufweist, die radial innerhalb der Hauptschneidkante angeordnet ist, wobei die Spanformungseinrichtung eine erste Aussparung bzw. Vertiefung aufweist, die von einer flachen Abfasungsfläche (27) neben der Schneidkante (18) gekrümmt nach einwärts und unten verläuft, wobei die erste Aussparung sich nach oben krümmt, um eine Spanbrecherwand (32) zu bilden, welche radial innerhalb der Spanformungseinrichtung angeordnet ist und sich von dieser nach oben erstreckt, **dadurch gekennzeichnet**, **daß** die Spanformungseinrichtung (19) durch eine Mehrzahl von zweiten Aussparungen (28) gebildet wird, welche zentral auf der oberen Fläche angeordnet sind und eine größere Tiefe haben als die erste Aussparung, wobei jede dieser zweiten Aussparungen in einem vorbestimmten Abstand innerhalb der Schneidkante liegt und eine längliche Erstreckung in Richtung parallel zu der Längserstreckung des Einsatzes hat, wobei die seitliche Ausdehnung der ersten Aussparung durch erste Stegabschnitte (34a, 34b) begrenzt wird, die in Richtung nach hinten konvergieren und an einem hinten gelegenen Punkt in einstückig ausgebildete zweite Stegabschnitten (35a, 35b) übergehen, wobei die zweiten Stegabschnitte sich im wesentlichen senkrecht bezüglich der Hauptschneidkante (18) erstrecken.

2. Einsatz nach Anspruch 8, dadurch gekennzeichnet, daß der Einsatz mit dritten Aussparungen (30) versehen ist, die in Richtung der Längserstreckung des Einsatzes kürzer sind, wobei die dritten Aussparungen auf beiden Seiten der zentral vorgesehenen Aussparung (28) angeordnet sind.

3. Einsatz nach Anspruch 1 oder 2, dadurch gekennzeichnet, daß die Aussparungen (28, 30) im Abstand voneinander vorgesehen sind und daß ein flacher Abfasungsabschnitt (27) zwischen der Hauptschneidkante (18) und den Aussparungen (28, 30) vorgesehen ist, wobei die Fase (27) in einer Ebene (P) angeordnet ist, die sich in der Längserstreckung des Einsatzes erstreckt.

4. Einsatz nach Anspruch 1, dadurch gekennzeichnet, daß die ersten Stegabschnitte (34a, 34b) sich von dem äußeren Umfang der dritten Aussparung (30) aus erstrecken, und daß die zweiten Stegabschnitte (35a, 35b) sich zu dem vorwärts geneigten Abschnitt einer Schulter (17) erstrecken, die hinter der Spanbrecherwand (32) angeordnet ist.

5. Einsatz nach einem der Ansprüche 1 bis 4, dadurch gekennzeichnet, daß das vordere Ende des Einsatzes mit Seitenschneidkanten (36a, 36b) versehen ist, die nach hinten bis zu einer Zwischenposition entlang des Einsatzes aufeinanderzulaufen.

6. Einsatz nach einem der Ansprüche 1 bis 5, dadurch gekennzeichnet, daß die hintere Spanbrecherwand (32) in einem Plateau (33) endet, welches auf näherungsweise dem gleichen Niveau angeordnet ist, wie eine neutrale Ebene (P), die auch die primäre Fase (27) enthält.

7. Einsatz nach einem der Ansprüche 1 bis 6, dadurch gekennzeichnet, daß die Breite der Fase (27) sich entlang der Kante (18) in der Weise verändert, daß diese Breite an einem Abschnitt vor dem vorderen Ende jeder ovalen Aussparung (28) schmaler ist, während die Breite in Abschnitten vor den Zwischenspanflächen (29), die zwischen benachbarten Aussparungen (28) angeordnet sind, größer ist.

8. Einsatz nach einem der Ansprüche 1 bis 7, dadurch gekennzeichnet, daß die vorderen Stegabschnitte (34a, 34b) jeweils mit einer Oberfläche ausgebildet sind, die aufwärts geneigt verläuft, bis sie eine Oberfläche der hinteren Stegabschnitte (35a, 35b) schneidet.

9. Einsatz nach Anspruch 1 bis 8, dadurch gekennzeichnet, daß das Niveau der oberen Fläche der hinteren Stegabschnitte (35a, 35b) auf einer Höhe oberhalb des Niveaus der neutralen Ebene (P), welche die flache Fase enthält, und in etwa parallel zu dieser liegt.

## Revendications

1. Plaquette de coupe de métal de forme généralement rectangulaire destinée à des opérations de tournage et de rainurage comprenant des surfaces supérieure et inférieure s'étendant de l'avant à l'arrière (13, 14), deux surfaces latérales disposées de manière opposée (11, 12) raccordant lesdites surfaces supérieure et inférieure s'étendant de l'avant à l'arrière et lesdites surfaces d'extrémité avant et arrière (15, 16) intersectant chacune lesdites surfaces supérieure et inférieure s'étendant de l'avant à l'arrière et ladite surface latérales, une partie avant de la surface supérieure comprenant une arête de coupe principale (18) formée par l'intersection entre ladite surface supérieure et ladite surface avant (16), un dispositif de formation de copeaux (19) disposé radialement à l'intérieur de ladite arête de coupe principale, ledit dispositif de formation de copeaux comprenant un premier évidement qui s'incurve vers l'arrière et vers le bas à partir d'un listel de lèvre de coupe plat (27) adjacent à l'arête de coupe (18), ledit premier évidement s'incurvant vers le haut afin de former une paroi de rupture de copeaux (32) qui est disposée radialement à l'intérieur du dispositif de formation de copeaux et s'étend vers le haut à partir de celle-ci, caractérisé en ce que le dispositif de formation de copeaux (19) est formé par une pluralité de seconds évidements (28) placés au centre de la surface supérieure, ayant une profondeur plus grande que la profondeur dudit premier évidement, chaque dit second évidement étant placé à une distance prédéterminée à l'intérieur de l'arête de coupe et ayant un prolongement dans le sens de la longueur dans une direction parallèle au prolongement longitudinal de la plaquette de coupe, le prolongement latéral dudit premier évidement étant confiné par des premières parties de nervures 34a, 34b qui convergent vers l'arrière et se rencontrent à un point vers l'arrière avec des secondes parties de nervures solidaires (34a, 35b), lesdites secondes parties de nervures s'étendant essentiellement perpendiculairement par rapport à ladite arête de coupe principale (18).

2. Plaquette de coupe selon la revendication 1, caractérisée en ce que la plaquette de coupe est prévue avec des troisièmes évidements (30) d'une longueur plus courte suivant le prolongement longitudinal de la plaquette de coupe, lesdits troisièmes évidements étant disposés sur chaque côté desdits évidements prévus au centre (28).

3. Plaquette de coupe selon la revendication 1 ou 2, caractérisée en ce que les évidements (28, 30), sont prévus à distance l'un de l'autre et en ce qu'il existe un listel de lèvre de coupe plat (27) prévu entre l'arête de coupe principale (18) et lesdits évidements (28, 30), ledit listel de lèvre de coupe (27) étant orienté dans un plan (P) s'étendant dans le prolongement longitudinal de ladite plaquette de coupe.

4. Plaquette de coupe selon la revendication 1, caractérisée en ce que lesdites premières parties de nervures (34a, 34b) s'étendent à partir de la périphérie extérieure desdits troisièmes évidements (30) et en ce que lesdites secondes parties de nervures (35a, 35b) s'étendent vers l'inclinaison avant d'un épaulement (17) prévu à l'arrière de ladite paroi de rupture de copeaux (32).

5. Plaquette de coupe selon l'une quelconque des revendications 1 à 4, caractérisée en ce que l'extrémité avant de la plaquette de coupe est munie d'arêtes de coupe latérales (36a, 36b) qui convergent vers l'arrière à une position intermédiaire le long de la plaquette de coupe.

6. Plaquette de coupe selon l'une quelconque des revendications 1 à 5, caractérisée en ce que la paroi de rupture de copeaux arrière (32) se termine en un plateau (33) situé approximativement au même niveau qu'un plan neutre (P) contenant également ledit listel de lèvre de coupe primaire (27).

7. Plaquette de coupe selon l'une quelconque des revendications 1 à 6, caractérisée en ce que la largeur du listel de lèvre de coupe (27) varie suivant l'arête (18) d'une manière telle que ladite largeur est inférieure à une partie à l'avant de l'extrémité avant de chaque évidement ovale (28) tandis que ladite largeur est plus grande à des parties à l'avant des surfaces de dépouille intermédiaires (29) placées entre les évidements adjacents (28).

8. Plaquette de coupe selon l'une quelconque des revendications 1 à 7, caractérisée en ce que lesdites parties de nervures avant (34a, 34b) sont chacune formées avec une surface supérieure inclinée vers le haut jusqu'à ce qu'elles rencontrent une surface supérieure desdites parties de nervures arrière (35a, 35b).

9. Plaquette de coupe selon la revendication 1 à 6, caractérisée en ce que le niveau de la surface supérieure desdites parties de nervures arrière (35a, 35b) est situé à un niveau au-dessus et généralement parallèle audit niveau dudit plan neutre (P) contenant ledit listel de lèvre de coupe plat.
